# EUROPÄISCHE PATENTANMELDUNG

(11) **EP 4 268 555 A2**
(43) Veröffentlichungstag der Anmeldung: **01.11.2023**
(21) Anmeldenummer: 23155744.8
(22) Anmeldetag: 09.02.2023
(51) Int. Cl.: A01B 69/04

(54) **ASSISTENZSYSTEM FÜR EINE AUTONOME LANDWIRTSCHAFTLICHE ARBEITSMASCHINE**

(30) Priorität: 27.04.2022 DE 102022110287
(71) Anmelder: CLAAS E-Systems GmbH, 49201 Dissen (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(57) **Zusammenfassung**

Die Erfindung betrifft ein Assistenzsystem für eine autonome landwirtschaftliche Arbeitsmaschine (2), wobei das Assistenzsystem (7) eingerichtet ist, einen Nutzer (8) bei der Planung und/oder Durchführung einer landwirtschaftlichen Arbeitsaufgabe mittels einer autonomen landwirtschaftlichen Arbeitsmaschine (2) zu unterstützen, wobei die autonome landwirtschaftliche Arbeitsmaschine (2) mittels eines Konfigurationsdatensatzes zur Durchführung der landwirtschaftlichen Arbeitsaufgabe konfiguriert werden kann, wobei das Assistenzsystem (7) eingerichtet ist, einen Konfigurationsdatensatz für die autonome landwirtschaftliche Arbeitsmaschine (2) zu erzeugen und an die autonome landwirtschaftliche Arbeitsmaschine (2) zu übertragen, wobei das Assistenzsystem (7) ein Nutzerinterface (9) aufweist, wobei ein Nutzer (8) mittels des Nutzerinterfaces (9) dem Assistenzsystem (7) Strategievorgaben für die Durchführung der landwirtschaftlichen Arbeitsaufgabe mittels der autonomen landwirtschaftlichen Arbeitsmaschine (2) vorgeben kann, wobei das Assistenzsystem (7) eingerichtet ist, aus den Strategievorgaben einen Konfigurationsdatensatz für die autonome landwirtschaftliche Arbeitsmaschine (2) zu erzeugen und an die autonome landwirtschaftliche Arbeitsmaschine (2) zu übermitteln.

## Beschreibung

Die vorliegende Erfindung betrifft ein Assistenzsystem für eine autonome landwirtschaftliche Arbeitsmaschine gemäß Anspruch 1 sowie ein Verfahren zur Durchführung einer landwirtschaftlichen Arbeitsaufgabe gemäß Anspruch 13 sowie eine autonome landwirtschaftliche Universal-Arbeitsmaschine gemäß Anspruch 14 sowie eine Verwendung einer autonomen landwirtschaftlichen Universalarbeitsmaschine gemäß Anspruch 15.

Die vorliegend in Rede stehenden autonomen landwirtschaftlichen Arbeitsmaschinen wie autonome Mähdrescher, autonome Feldhäcksler, autonome Traktoren und autonome landwirtschaftliche Universal-Arbeitsmaschinen werden üblicherweise unbemannt ausgestaltet. Bekannte autonome landwirtschaftliche Arbeitsmaschinen weisen ein Benutzerinterface auf, über das gewisse Konfigurationen der autonomen landwirtschaftlichen Arbeitsmaschine für eine landwirtschaftliche Arbeitsaufgabe vorgenommen werden können. Beispielsweise kann eine Fahrgeschwindigkeit vorgegeben werden, es können Einstellungen für diverse Arbeitsaggregate vorgenommen werden und dergleichen.

Problematisch ist dabei, dass der Nutzer eine tiefe Kenntnis des Prozesses und der Funktion der autonomen landwirtschaftlichen Arbeitsmaschine benötigt, um hier optimale Einstellungen wählen zu können. Eine derartige vertiefte Kenntnis konterkariert den Autonomiegedanken und kann von vielen Nutzern nicht gewährleistet werden.

Bekannt ist, bemannten landwirtschaftlichen Arbeitsmaschinen Zielvorgaben vorzugeben und den Nutzer so von den Detaileinstellungen zu entkoppeln, wodurch der Nutzer weniger Fachwissen benötigt (DE 10 2015 121 210 A1). Diese Zielvorgaben für eine bemannte landwirtschaftliche Arbeitsmaschine können allerdings vom Nutzer während der Fahrt ausgewählt und weiter optimiert werden. Außerdem ist der Fahrer einer nicht-autonomen landwirtschaftlichen Arbeitsmaschine notwendigerweise mehr in den Prozess involviert.

Es ist dabei ein Problem, den bekannten Stand der Technik so zu verbessern, dass die Konfiguration autonomer landwirtschaftlicher Arbeitsmaschinen verbessert wird.

Das obige Problem wird durch die Merkmale von Anspruch 1 gelöst.

Wesentlich ist die grundsätzliche Überlegung, den Nutzer auch bei autonomen landwirtschaftlichen Arbeitsmaschinen von der Konfiguration zu entkoppeln. Dies geschieht vorliegend über ein Assistenzsystem, das extern zu der autonomen landwirtschaftlichen Arbeitsmaschine angeordnet ist. Das Assistenzsystem kann für verschiedene autonome landwirtschaftliche Arbeitsmaschinen ein einheitliches Interface bereitstellen. Hinzu kommt, dass das Assistenzsystem komfortabel beispielsweise über einen Heimcomputer oder ein Mobilgerät bedient werden kann und das Assistenzsystem auch auf Datenbankinformationen extern zu der autonomen landwirtschaftlichen Arbeitsmaschine zugreifen kann. Das Assistenzsystem kann beispielsweise Teil eines Farm Management Information Systems sein. Das Assistenzsystem kann somit einen Nutzer bei der Konfiguration der autonomen landwirtschaftlichen Arbeitsmaschine unterstützen.

Im Einzelnen wird ein Assistenzsystem für eine autonome landwirtschaftliche Arbeitsmaschine vorgeschlagen, wobei das Assistenzsystem eingerichtet ist, einen Nutzer bei der Planung und/oder Durchführung einer landwirtschaftlichen Arbeitsaufgabe mittels einer autonomen landwirtschaftlichen Arbeitsmaschine zu unterstützen, wobei die autonome landwirtschaftliche Arbeitsmaschine mittels eines Konfigurationsdatensatzes zur Durchführung der landwirtschaftlichen Arbeitsaufgabe konfiguriert werden kann, wobei das Assistenzsystem eingerichtet ist, einen Konfigurationsdatensatz für die autonome landwirtschaftliche Arbeitsmaschine zu erzeugen und an die autonome landwirtschaftliche Arbeitsmaschine zu übertragen, wobei das Assistenzsystem ein Nutzerinterface aufweist, wobei ein Nutzer mittels des Nutzerinterfaces dem Assistenzsystem Strategievorgaben für die Durchführung der landwirtschaftlichen Arbeitsaufgabe mittels der autonomen landwirtschaftlichen Arbeitsmaschine vorgeben kann, wobei das Assistenzsystem eingerichtet ist, aus den Strategievorgaben einen Konfigurationsdatensatz für die autonome landwirtschaftliche Arbeitsmaschine zu erzeugen und an die autonome landwirtschaftliche Arbeitsmaschine zu übermitteln.

In einer bevorzugten Ausgestaltung gemäß Anspruch 2 handelt es sich bei der autonomen landwirtschaftlichen Arbeitsmaschine um eine autonome landwirtschaftliche Universal-Arbeitsmaschine. Grundsätzlich kann zwischen zwei Konzepten autonomer landwirtschaftlicher Arbeitsmaschinen unterschieden werden. Die autonomen landwirtschaftlichen Arbeitsmaschinen können einerseits spezialisiert sein, wie es beispielsweise ein autonomer Mähdrescher oder gar ein autonomer Weizen-Mähdrescher wäre, oder andererseits generalisiert. Derartige generalisierte autonome landwirtschaftliche Arbeitsmaschinen als autonome landwirtschaftliche Universal-Arbeitsmaschinen stehen im Fokus der Ausgestaltung gemäß Anspruch 2. Diese autonomen landwirtschaftlichen Universal-Arbeitsmaschinen zeichnen sich dadurch aus, dass sie durch wechselnde Konfigurationen wie wechselnde Arbeitsaggregate und wechselnde Softwarebausteine für eine Vielzahl unterschiedlicher landwirtschaftlicher Arbeitsaufgaben verwendet werden können.

Derartige autonome landwirtschaftliche Universal-Arbeitsmaschinen sind aufgrund ihrer hohen Flexibilität mit vielen Einstellungs- und Konfigurationsmöglichkeiten versehen, die teilweise softwareseitig automatisch vorgenommen werden. Einen Gesamtüberblick zu behalten und eine effiziente Konfiguration zu wählen, ist den wenigsten Nutzern zumutbar. Indem nun das Assistenzsystem aus einer Strategievorgabe wie "maximale Ressourcenschonung" die im Einzelfall optimierten Konfigurationen ermittelt, kann die autonome landwirtschaftliche Universal-Arbeitsmaschine im Ergebnis besser eingestellt werden.

Anspruch 3 gibt bevorzugte Ausgestaltungen des Konfigurationsdatensatzes für eine insbesondere KI-gesteuerte autonome landwirtschaftliche Arbeitsmaschine an.

Eine autonome landwirtschaftliche Arbeitsmaschine kann durch das Zurverfügungstellen von Prozesswissen individualisiert werden. Gemäß Anspruch 4 kann vorgesehen sein, dass dieses Prozesswissen ebenfalls von dem Assistenzsystem geliefert wird. So können Prozesswissen und Konfigurationsdatensatz aufeinander abgestimmt werden.

Anspruch 5 betrifft die Möglichkeit, dass der Nutzer mittels des Assistenzsystems die landwirtschaftliche Arbeitsaufgabe plant. Eine bevorzugte Ausgestaltung gemäß Anspruch 5 betrifft außerdem die Möglichkeit, einen Verbund autonomer landwirtschaftlicher Arbeitsmaschinen für die landwirtschaftliche Arbeitsaufgabe einzusetzen. Anspruch 6 betrifft bevorzugte Ausgestaltungen der Planung. Gemäß Anspruch 7 schließlich kann vorgesehen sein, dass das Assistenzsystem Prozesswissen und/oder Konfigurationsdatensätze für mehrere autonome landwirtschaftliche Arbeitsmaschinen des Verbundes zur Verfügung stellt. Auf diese Art und Weise kann eine gesamte Bearbeitung der landwirtschaftlichen Arbeitsaufgabe optimiert werden und die Vorteile, eines separaten Assistenzsystems kommen voll zur Geltung.

Anspruch 8 betrifft bevorzugte weitere Informationen, die von dem Assistenzsystem als separatem System einfach berücksichtigt werden können.

Bei einer Ausgestaltung gemäß Anspruch 9 ist vorgesehen, dass das Assistenzsystem die landwirtschaftliche Arbeitsaufgabe simuliert, um den Konfigurationsdatensatz zu ermitteln. Interessant ist dabei auch die Möglichkeit, unterschiedliche Teilaspekte betreffende Teilkonfigurationen in der Simulation zu kombinieren, beispielsweise unterschiedliche arbeitsaggregatspezifische Teilkonfigurationen und arbeitsaufgabenspezifische Teilkonfigurationen, die insbesondere jeweils von Experten, beispielsweise Herstellern des Arbeitsaggregats und der autonomen landwirtschaftlichen Arbeitsmaschine, hinterlegt wurden.

Eine Ausgestaltung gemäß Anspruch 10 betrifft die Möglichkeit, einem Nutzer einen Fortschritt anzuzeigen, sodass dieser gegebenenfalls nachsteuern kann.

Die Ansprüche 11 und 12 betreffen ortsbasierte Konfigurationen und eine Routenplanung, sodass die autonome landwirtschaftliche Arbeitsmaschine auf unterschiedliche örtliche Gegebenheiten reagieren kann.

Nach einer weiteren Lehre gemäß Anspruch 13, der eigenständige Bedeutung zukommt, wird ein Verfahren zur Durchführung einer landwirtschaftlichen Arbeitsaufgabe mittels einer autonomen landwirtschaftlichen Arbeitsmaschine, wobei ein Assistenzsystem vorgesehen ist, wobei das Assistenzsystem einen Nutzer bei der Planung und/oder Durchführung einer landwirtschaftlichen Arbeitsaufgabe mittels einer autonomen landwirtschaftlichen Arbeitsmaschine unterstützt, wobei die autonome landwirtschaftliche Arbeitsmaschine mittels eines Konfigurationsdatensatzes zur Durchführung der landwirtschaftlichen Arbeitsaufgabe konfiguriert wird, wobei das Assistenzsystem einen Konfigurationsdatensatz für die autonome landwirtschaftliche Arbeitsmaschine erzeugt und an die autonome landwirtschaftliche Arbeitsmaschine übertragt, wobei das Assistenzsystem ein Nutzerinterface aufweist, wobei ein Nutzer mittels des Nutzerinterfaces dem Assistenzsystem Strategievorgaben für die Durchführung der landwirtschaftlichen Arbeitsaufgabe mittels der autonomen landwirtschaftlichen Arbeitsmaschine vorgibt, wobei das Assistenzsystem aus den Strategievorgaben einen Konfigurationsdatensatz für die autonome landwirtschaftliche Arbeitsmaschine erzeugt und an die autonome landwirtschaftliche Arbeitsmaschine übermittelt beansprucht.

Auf alle Ausführungen zu dem vorschlagsgemäßen Assistenzsystem darf verwiesen werden.

Nach einer weiteren Lehre gemäß Anspruch 14, der ebenfalls eigenständige Bedeutung zukommt, wird eine autonome landwirtschaftliche Universal-Arbeitsmaschine eingerichtet zum Erhalt eines Konfigurationsdatensatzes von einem vorschlagsgemäßen Assistenzsystem beansprucht.

Auf alle Ausführungen zu dem vorschlagsgemäßen Assistenzsystem und dem vorschlagsgemäßen Verfahren darf verwiesen werden.

Nach einer weiteren Lehre gemäß Anspruch 15, der ebenfalls eigenständige Bedeutung zukommt, wird eine Verwendung einer autonomen landwirtschaftlichen Arbeitsmaschine in einem vorschlagsgemäßen Verfahren beansprucht.

Auf alle Ausführungen zu dem vorschlagsgemäßen Assistenzsystem, dem vorschlagsgemäßen Verfahren und der vorschlagsgemäßen autonomen landwirtschaftlichen Universal-Arbeitsmaschine darf verwiesen werden.

Im Folgenden wird die Erfindung anhand einer lediglich ein Ausführungsbeispiel darstellenden Zeichnung näher erläutert. In der Zeichnung zeigt
- Fig. 1: die Durchführung einer landwirtschaftlichen Arbeitsaufgabe,
- Fig. 2: ein vorschlagsgemäßes Assistenzsystem mit Benutzerinterface und
- Fig. 3: zwei autonome landwirtschaftliche Universal-Arbeitsmaschinen, die als Feldhäcksler zusammenarbeiten.

Ein beispielhafter Anwendungsfall ist vorliegend ein Erntevorgang. Dieser Erntevorgang umfasst beispielhaft die Prozesskette aus den landwirtschaftlichen Arbeitsaufgaben "Abernten eines Feldbestandes" und "Bergung des Erntegutes".

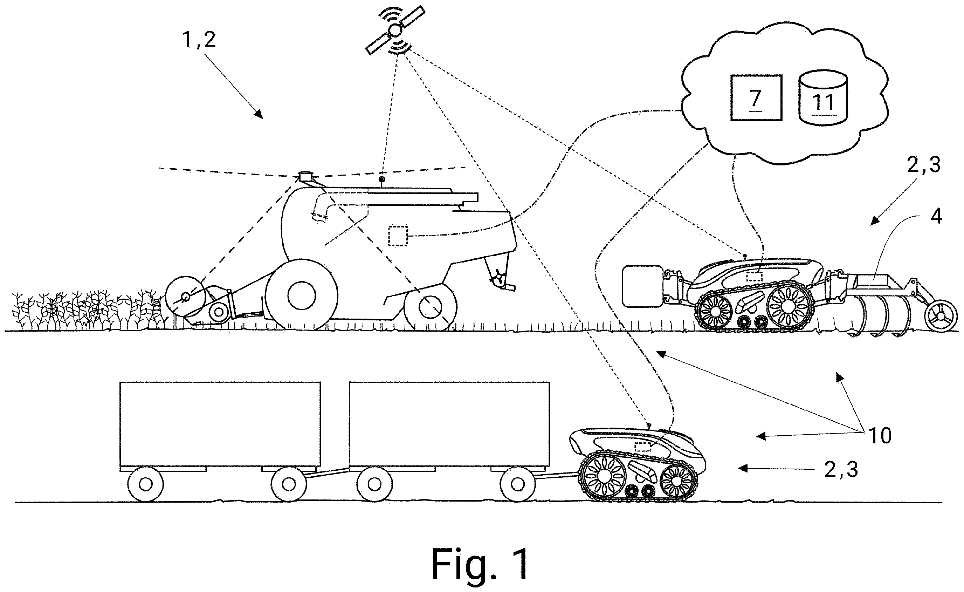

In der Regel wird diese Prozesskette so abgearbeitet, dass zunächst ein oder mehrere als Mähdrescher 1 ausgeführte landwirtschaftliche Arbeitsmaschinen den auf einer Anbaufläche gewachsenen Feldbestand abernten (Fig. 1). Beispielhaft wird der von den Fruchtständen gebildete Teil des Erntegutes auf dem Mähdrescher 1 in einem Korntank zwischengespeichert während der verbleibende Teil des Erntegutes, das Stroh, in Schwaden auf der Anbaufläche abgelegt wird. Hat das in Schwaden abgelegte Stroh einen die Einlagerung des Strohs zulassenden Feuchtegehalt erreicht, verpresst eine von einem Schlepper gezogene Ballenpresse das Stroh zu Erntegutballen, die zunächst auf der Anbaufläche abgelegt werden.

In einem weiteren Arbeitsgang der Prozesskette werden die Erntegutballen beispielsweise mittels sogenannter Hubstapler auf von Schleppern gezogene Pritschenanhänger verladen und zur Einlagerung abtransportiert. In analoger Weise werden die im Korntank zwischengespeicherten Fruchtstände von schleppergezogenen Transportanhängern übernommen und zur Einlagerung oder Weiterverarbeitung geführt.

Im vorliegenden Fall können nun eine oder mehrere dieser Tätigkeiten von autonomen landwirtschaftlichen Arbeitsmaschinen 2, insbesondere autonomen landwirtschaftlichen Universal-Arbeitsmaschinen 3 in unterschiedlichen Konfigurationen, übernommen werden. Fig. 1 zeigt beispielsweise die Zusammenarbeit von autonomen landwirtschaftlichen Universal-Arbeitsmaschinen 3 und einem autonomen Mähdrescher 1 bei der Ernte.

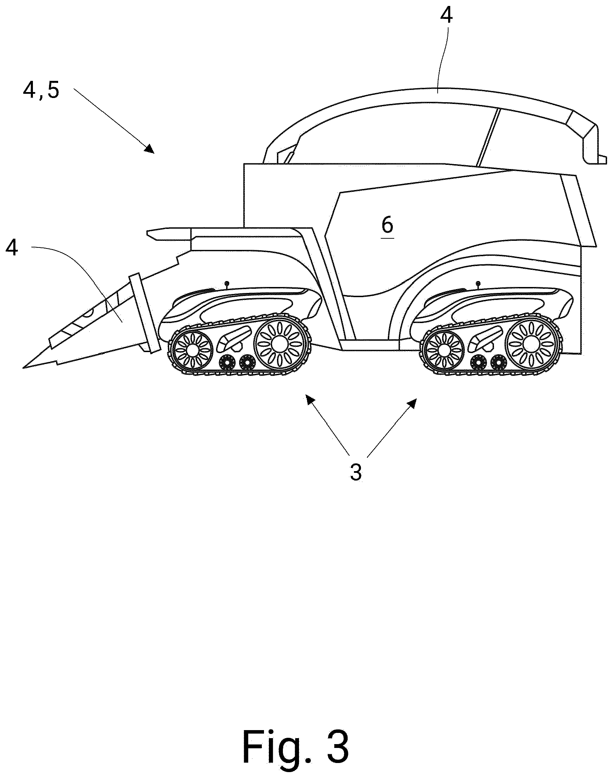

Alternativ ist auch denkbar, dass die autonomen landwirtschaftlichen Universal-Arbeitsmaschinen 3 durch Konfigurationsänderungen, also insbesondere durch Ausstattung mit entsprechenden Arbeitsaggregaten 4, als Feldhäcksler 5 verwendet werden. Denkbar ist beispielsweise, dass ein Rumpf-Feldhäcksler 6 als Arbeitsaggregat 4 mit wenig Elektronik und ohne Fahrantrieb mittels einer oder mehrerer autonomer landwirtschaftlicher Universal-Arbeitsmaschinen 3 betrieben wird, indem die autonomen landwirtschaftlichen Universal-Arbeitsmaschinen 3 als Fahrantrieb und Steuerung dienen und an den Rumpf-Feldhäcksler 6 andockbar sind (Fig. 3).

Vorgeschlagen wird ein Assistenzsystem 7 für eine autonome landwirtschaftliche Arbeitsmaschine 2, wobei das Assistenzsystem 7 eingerichtet ist, einen Nutzer 8 bei der Planung und/oder Durchführung einer landwirtschaftlichen Arbeitsaufgabe mittels einer autonomen landwirtschaftlichen Arbeitsmaschine 2 zu unterstützen.

Die landwirtschaftliche Arbeitsaufgabe kann beispielsweise eine Ernte sein, die autonom von der autonomen landwirtschaftliche Arbeitsmaschine 2 durchgeführt werden soll. Bei einer Ernte können unterschiedliche Qualitätskriterien optimiert werden. Viele dieser Qualitätskriterien konkurrieren jedoch miteinander. Der Begriff "konkurrierend" ist im Hinblick auf zwei Qualitätskriterien so zu verstehen, dass die Erfüllung des einen Qualitätskriteriums der Erfüllung des anderen Qualitätskriteriums entgegenwirkt und umgekehrt.

Insbesondere zur Erfüllung eines oder mehrerer ausgewählter Qualitätskriterien kann die autonome landwirtschaftliche Arbeitsmaschine 2 mittels eines Konfigurationsdatensatzes zur Durchführung der landwirtschaftlichen Arbeitsaufgabe konfiguriert werden.

Das Assistenzsystem 7 ist eingerichtet, einen Konfigurationsdatensatz für die autonome landwirtschaftliche Arbeitsmaschine 2 zu erzeugen und an die autonome landwirtschaftliche Arbeitsmaschine 2 zu übertragen. Die autonome landwirtschaftliche Arbeitsmaschine 2 nutzt den Konfigurationsdatensatz zur Durchführung der landwirtschaftlichen Arbeitsaufgabe.

Das Assistenzsystem 7 weist ein Nutzerinterface 9 auf. Ein Nutzer 8 kann mittels des Nutzerinterfaces 9 dem Assistenzsystem 7 Strategievorgaben für die Durchführung der landwirtschaftlichen Arbeitsaufgabe mittels der autonomen landwirtschaftlichen Arbeitsmaschine 2 vorgeben.

Das Assistenzsystem 7 ist eingerichtet, aus den Strategievorgaben den Konfigurationsdatensatz für die autonome landwirtschaftliche Arbeitsmaschine 2 zu erzeugen und an die autonome landwirtschaftliche Arbeitsmaschine 2 zu übermitteln.

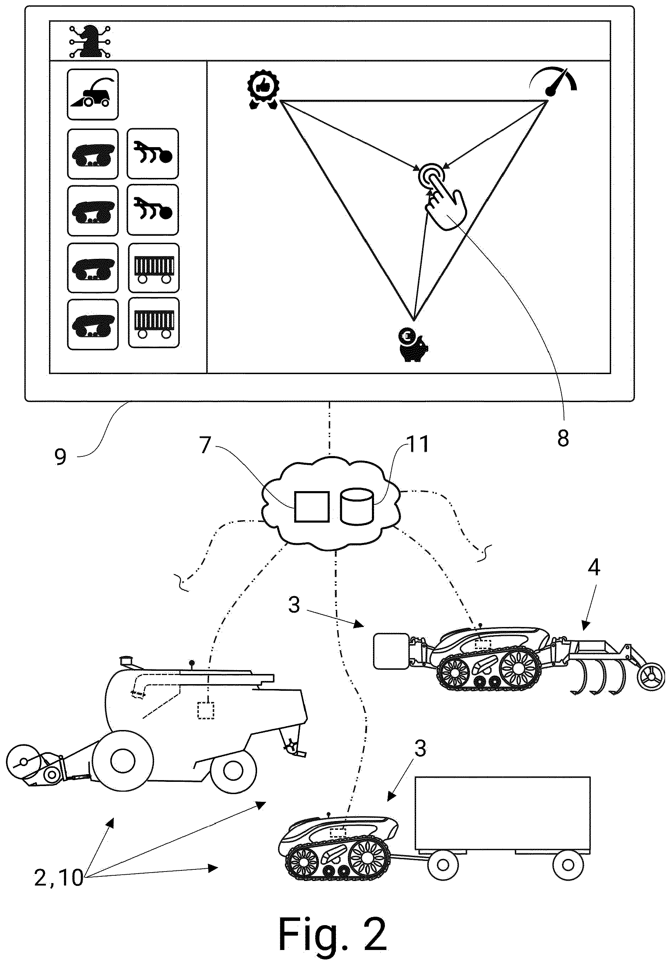

Strategievorgaben können abstrakte Strategien und/oder Gewichtungen von Qualitätskriterien umfassen. Die abstrakten Strategien umfassen hier und vorzugsweise eine maschinenschonende Strategie mit geringem Verschleiß der autonomen landwirtschaftlichen Arbeitsmaschine 2 und/oder einen Eco-Modus mit geringem Energieverbrauch aber längerer Arbeitszeit und/oder ein schnelles Abarbeiten mit höherem Treibstoffverbrauch, und/oder eine höhere Erntequalität mit höherem Zeitaufwand und/oder einen hohen Durchsatz mit geringerer Erntequalität. Die Qualitätskriterien umfassen vorzugsweise konkurrierende Qualitätskriterien, für die der Nutzer 8, wie in Fig. 2 beispielhaft für drei Qualitätskriterien dargestellt, eine Gewichtung grafisch einstellen kann. Die grafische Anzeige visualisiert dabei die Konkurrenz der Qualitätskriterien.

Der Definition des jeweiligen Qualitätskriteriums kommt vorliegend besondere Bedeutung zu. Hier und vorzugsweise ist jedes Qualitätskriterium ganz allgemein durch eine Zielvorgabe der Optimierung oder der Einstellung eines Arbeitsprozessparameters definiert. Der Begriff "Optimierung" kann im einfachsten Fall die Maximierung oder Minimierung des jeweiligen Arbeitsprozessparameters umfassen. Der Begriff "Einstellung" bedeutet, dass der jeweilige Arbeitsprozessparameter einen speziellen Wert einnehmen soll und das Assistenzsystem 7 den Konfigurationsdatensatz dahingehend optimiert, dass dieser Wert, nach Möglichkeit, eingenommen wird, insbesondere indem der Konfigurationsdatensatz diesbezüglich optimierte Maschinenparametereinstellungen aufweist. Die Qualitätskriterien können vorzugsweise gewählt sein aus der Liste umfassend "Ausdrusch", "Bruchkornanteil", "Abscheideverluste", "Reinigungsverluste", "Schlupf Dreschwerk-Antrieb", "Kraftstoffverbrauch", "Durchsatz", "Sauberkeit" und "Strohqualität".

Das Assistenzsystem 7 kann eine zentrale Serveranwendung sein, bei der alle Kommunikation zusammenläuft, genauso ist aber auch ein dezentrales Assistenzsystem 7 oder eine Mischform möglich. Hier und vorzugsweise steht das Assistenzsystem 7 mit einem Farm Management Information System in Verbindung oder ist ein Teil davon.

Das Assistenzsystem 7 umfasst Hardware, insbesondere eine Recheneinheit. Das Assistenzsystem 7 kann rein cloudbasiert oder rein lokal ausgestaltet sein oder mehrere Recheneinheiten umfassen. In einer hier nicht näher beleuchteten Variante ist das Assistenzsystem 7 vollständig auf der einer nicht-autonomen landwirtschaftlichen Arbeitsmaschine angeordnet, die vorzugsweise einen Verbund 10 mit der autonomen landwirtschaftlichen Arbeitsmaschine 2 steuert, und dort als Modul ausgestaltet, das mit der Steuerung der autonomen landwirtschaftlichen Universal-Arbeitsmaschine 3 kommuniziert. Generell ist das Assistenzsystem 7 extern zu der autonomen landwirtschaftlichen Arbeitsmaschine 2 angeordnet.

Weiter ist hier und vorzugsweise vorgesehen, dass die autonome landwirtschaftliche Arbeitsmaschine 2 eine autonome landwirtschaftliche Universal-Arbeitsmaschine 3 ist, die zur Verrichtung einer Vielzahl unterschiedlicher landwirtschaftlicher Arbeitsaufgaben konfigurierbar ist, indem sie mit wechselnden Arbeitsaggregaten 4 ausgestattet wird.

Bei einer autonomen landwirtschaftlichen Universal-Arbeitsmaschine 3 handelt es sich um eine Arbeitsmaschine, die autonom, also ohne engmaschige Nutzerüberwachung 8 und auf Basis eigener Aktionen eine landwirtschaftliche Arbeitsaufgabe ausführen kann. Hier handelt es sich bei der autonomen landwirtschaftlichen Universal-Arbeitsmaschine 3 um eine unbemannte Arbeitsmaschine. Sie kann alleine oder im Verbund 10 tätig sein.

Weiterhin ist die autonome landwirtschaftliche Universal-Arbeitsmaschine 3 zur Durchführung einer Vielzahl unterschiedlicher landwirtschaftlicher Arbeitsaufgaben konfigurierbar, insbesondere durch den Austausch bzw. das Anbringen von Arbeitsaggregaten 4.

Vorzugsweise kann vorgesehen sein, dass bei einer autonomen landwirtschaftlichen Universal-Arbeitsmaschine 3 bei einem Wechsel des Arbeitsaggregats 4 zusätzlich ein Wechsel von Steuerungsbaugruppen erfolgt, die das Arbeitsaggregat 4 betreffen, oder, dass Steuerungsbaugruppen hinzugefügt werden. Auch möglich ist, dass zwei oder mehr als zwei autonome landwirtschaftliche Universal-Arbeitsmaschinen 3 gemeinsam ein Arbeitsaggregat 4 betreiben (Fig. 3), also dass beispielsweise zwei autonome landwirtschaftliche Universal-Arbeitsmaschinen 3 zusammen mit einer größeren Tragstruktur mit diversen Arbeitsaggregaten 4 als Feldhäcksler 5, Mähdrescher 1 oder anderes fungieren.

Ebenfalls ist vorzugsweise vorgesehen, dass die autonome landwirtschaftliche Arbeitsmaschine 2 eine Steuereinheit aufweist und dass die Steuereinheit den Betrieb der autonomen landwirtschaftlichen Arbeitsmaschine 2, insbesondere KI-basiert, steuert. Vorzugsweise verhält es sich dabei so, dass der Konfigurationsdatensatz Zielvorgaben und/oder Randbedingungen und/oder Einstellungen vereinzelter Maschinenparameter aufweist, die von der Steuereinheit bei der Steuerung berücksichtigt, insbesondere umgesetzt, werden.

Einstellbare Maschinenparameter können Arbeitsgeschwindigkeiten sein, die gegebenenfalls ortsabhängig sind und sich insbesondere im Feld und/oder im Vorgewende und/oder bei einer Kurvenfahrt und/oder bei einer Vorwärtsfahrt und/oder bei einer Rückwärtsfahrt unterscheiden. Weiter können einstellbare Maschinenparameter zusätzlich oder alternativ Arbeitspositionen von Arbeitsaggregaten 4 wie Anbaugeräten oder einem Heckkraftheber sein. Bevorzugt umfassen die einstellbaren Maschinenparameter nicht die zur Einstellung dieser Maschinenparameter notwendigen Maschinenparameter der untersten Ebene wie die Motordrehzahl, die Drosselklappenposition usw.

Im Ergebnis liegt hier und vorzugsweise daher eine zweistufige Optimierung von Maschinenparametern vor, bei der sich die autonome landwirtschaftliche Arbeitsmaschine 2 selbst regelt und optimiert, die Zielvorgaben dafür jedoch in recht konkreter Form vom Assistenzsystem 7 erhält, das diese aus abstrakten Vorgaben des Nutzers 8 ableitet.

Weiter ist hier und vorzugsweise vorgesehen, dass das Assistenzsystem 7 eingerichtet ist, Prozesswissen für die landwirtschaftliche Arbeitsaufgabe für die autonome landwirtschaftliche Arbeitsmaschine 2 zu erzeugen und, insbesondere mit dem Konfigurationsdatensatz, an die autonome landwirtschaftliche Arbeitsmaschine 2 zu übertragen, vorzugsweise, dass das Assistenzsystem 7 eingerichtet ist, das Prozesswissen abhängig von dem Konfigurationsdatensatz zu erzeugen. Insbesondere ist die Ausgestaltung interessant in Kombination mit einer autonomen landwirtschaftlichen Universal-Arbeitsmaschine 3.

Hier und vorzugsweise ist vorgesehen, dass die autonome landwirtschaftliche Universal-Arbeitsmaschine 3 oder die autonomen landwirtschaftlichen Universal-Arbeitsmaschinen 3 mittels Prozesswissens für ihre jeweilige landwirtschaftliche Arbeitsaufgabe individualisiert werden.

Derartiges Prozesswissen kann optimierte Einstellungen von Maschinenparametern und/oder Parametrisierungen von Softwaremodulen und/oder Gewichte von neuronalen Netzwerken und/oder eine Routenplanung und/oder eine Optimierungsstrategie oder dergleichen umfassen. Die spezifischen Prozessdaten umfassen beispielsweise Feldinformationsdaten wie eine Fruchtart eines Feldbestandes und/oder eine Bodenart und/oder eine Bodensteigung und/oder feldunabhängige Prozessdaten wie vorhandene Betriebsmittel und/oder vorhergehende und/oder nachfolgende Arbeitsschritte. Die allgemeinen Prozessdaten umfassen unspezifische Prozessdaten wie beispielsweise optimierte Einstellungen der autonomen landwirtschaftlichen Universal-Arbeitsmaschine 3 für einen Erntevorgang. Umweltdaten sind solche Daten, die nicht direkt das Feld betreffen, sondern allgemein eine größere Umgebung, beispielsweise Wetterdaten, Temperaturdaten und dergleichen. Das Prozesswissen wird von der autonomen landwirtschaftlichen Universal-Arbeitsmaschine 3 zur Durchführung der landwirtschaftlichen Arbeitsaufgabe genutzt, insbesondere nutzt die autonome landwirtschaftliche Universal-Arbeitsmaschine 3 das Prozesswissen, um damit Maschinenparameter einzustellen.

Hier und vorzugsweise umfasst das Prozesswissen zumindest für einige, vorzugsweise für alle, Arbeitsaggregate 4, mit denen die autonome landwirtschaftliche Universal-Arbeitsmaschine 3 ausgerüstet werden kann, arbeitsaggregatspezifisches Arbeitsaggregatwissen 4. Hier und vorzugsweise ist es dann so, dass die autonome landwirtschaftliche Universal-Arbeitsmaschine 3 für einige oder alle Arbeitsaggregate 4, mit denen sie ausgerüstet werden kann, jedenfalls in einer Grund- oder Werkskonfiguration, kein arbeitsaggregatspezifisches Arbeitsaggregatwissen 4 aufweist. Alternativ kann die autonome landwirtschaftliche Universal-Arbeitsmaschine 3 für einige oder alle Arbeitsaggregate 4, mit denen sie ausgerüstet werden kann, jedenfalls in der Grund- oder Werkskonfiguration, arbeitsaggregatstypspezifisches Arbeitsaggregatwissen 4 aufweisen. So kann die autonome landwirtschaftliche Universal-Arbeitsmaschine 3 beispielsweise einen grundsätzlichen Satz an pflugspezifischem Arbeitsaggregatwissen 4 aufweisen, jedoch von einer externen Quelle für die individuelle landwirtschaftliche Arbeitsaufgabe mit Arbeitsaggregatwissen 4 betreffend den exakten Pflugtyp ausgestattet werden, das eine effizientere Verwendung des Pfluges erlaubt.

Vorzugsweise ist daher vorgesehen, dass die autonome landwirtschaftliche UniversalArbeitsmaschine 3 derart ausgestaltet ist, dass sie ohne das arbeitsaggregatspezifische Arbeitsaggregatwissen 4 das jeweilige Arbeitsaggregat 4 nicht oder nur auf Basis des arbeitsaggregatstypspezifischen Arbeitsaggregatwissen 4 verwenden kann.

Bei den Maschinenparametern kann es sich um Maschinenparameter im engen Sinne wie die Motordrehzahl oder eine Position einer Drosselklappe handeln. Ebenso sind Einstellungen eines Heckkrafthebers oder dergleichen umfasst. Die Maschinenparameter können auch Anweisungen an Einstellautomaten oder andere Steuerungssysteme der autonomen landwirtschaftlichen Universal-Arbeitsmaschine 3 umfassen, aus denen dann Maschinenparameter im engen Sinne generiert werden.

Weiter ist hier und vorzugsweise vorgesehen, dass das Assistenzsystem 7 derart eingerichtet ist, dass der Nutzer 8 mittels des Nutzerinterfaces 9 eine landwirtschaftliche Arbeitsaufgabe planen kann, vorzugsweise, dass das Assistenzsystem 7 eingerichtet ist, basierend auf der Strategievorgabe, insbesondere dialogbasiert, dem Nutzer 8 eine Konfiguration der autonomen landwirtschaftlichen Universal-Arbeitsmaschine 3 oder mehrerer autonomer landwirtschaftlicher Universal-Arbeitsmaschinen 3 für die Durchführung der landwirtschaftlichen Arbeitsaufgabe vorzuschlagen.

Generell gilt, dass das Assistenzsystem 7 bevorzugt derart ausgestaltet ist, dass alle oder mehrere der genannten Varianten in beliebiger Kombination zu unterschiedlichen Zeitpunkten, bei unterschiedlichen Nutzern 8 oder dergleichen umsetzbar sind.

Das Assistenzsystem 7 kann auch einen Verbund 10, insbesondere autonomer, landwirtschaftlicher Arbeitsmaschinen zur Durchführung der landwirtschaftlichen Arbeitsaufgabe vorschlagen.

Es kann auch angedacht sein, dass das Assistenzsystem 7 eingerichtet ist, basierend auf der Strategievorgabe, insbesondere dialogbasiert, dem Nutzer 8 eine Arbeitsgeschwindigkeit und/oder einen Einsatzplan für Betriebsmittel, insbesondere umfassend Einsatzzeitpunkte und/oder Einsatzmenge und/oder Beladeorte und/oder Belademengen, und/oder einen Abladeplan für Erntegut, insbesondere umfassend Abladezeitpunkte und/oder Abladeorte, und/oder eine Routenplanung für die autonome landwirtschaftliche Arbeitsmaschine 2, insbesondere autonome landwirtschaftliche UniversalArbeitsmaschine 3, und/oder den Verbund 10 vorzuschlagen.

Der Begriff "basierend auf" ist vorliegend immer derart zu verstehen, dass die Basis des Vorschlags, des Datensatzes oder dergleichen eine wesentliche Grundlage der Erstellung des Vorschlags, des Datensatzes oder dergleichen bildet. Jeweils bevorzugt ist, dass die Basis die primäre Grundlage der Erstellung des Vorschlags, des Datensatzes oder dergleichen bildet.

Betriebsmittel sind beispielsweise Treibstoff, Dünger und Saatgut.

Weiter ist hier und vorzugsweise vorgesehen, dass das Assistenzsystem 7 eingerichtet ist, basierend auf der Strategievorgabe Konfigurationsdatensätze und/oder Prozesswissen für den Verbund 10 zu erzeugen und an mindestens zwei autonome landwirtschaftliche Arbeitsmaschinen 2 des Verbunds 10, insbesondere zwei autonome landwirtschaftliche Universal-Arbeitsmaschinen 3 des Verbunds 10, zu übermitteln.

Durch die Optimierung des Verbundes 10 an zentraler Stelle kann eine Gesamtoptimierung der landwirtschaftlichen Arbeitsaufgabe unter Berücksichtigung einer Vielzahl an Zusammenhängen erreicht werden.

Denkbar ist ebenfalls, dass das Assistenzsystem 7 eine Datenbank 11 mit Datenbankinformationen 11 umfassend Feldinformationsdaten, insbesondere Bestandsdaten, und/oder Umweltdaten, insbesondere Wetterdaten, und/oder Ergebnissen vergangener Arbeitsaufgaben, insbesondere verknüpft mit vergangenen Konfigurationsdatensätzen, die zu den Ergebnissen geführt haben, und/oder Maschinendaten der autonomen landwirtschaftlichen Arbeitsmaschine 2 aufweist und basierend auf den Datenbankinformationen 11 den Konfigurationsdatensatz und/oder das Prozesswissen erzeugt.

Die Maschinendaten können alternativ auch von der autonomen landwirtschaftlichen Arbeitsmaschine 2 gestellt werden und betreffen Daten wie einen Typ, eine Leistung, vorhandene Schnittstellen und Fähigkeiten. Die Datenbankinformationen 11 können historische Daten und Echtzeitdaten umfassen.

Weiter ist hier und vorzugsweise vorgesehen, dass das Assistenzsystem 7 eingerichtet ist, eine Simulation der Durchführung der landwirtschaftlichen Arbeitsaufgabe durchzuführen, um den Konfigurationsdatensatz zu ermitteln, vorzugsweise, dass das Assistenzsystem 7 eingerichtet ist, in der Simulation unterschiedliche Kombinationen vordefinierter Teilkonfigurationen zu kombinieren, um eine optimierte Gesamtkonfiguration in Abhängigkeit von Prozessinformationsdaten zu ermitteln.

Die Teilkonfigurationen können beispielsweise von Experten hinterlegte Konfigurationen für den Einsatz eines Arbeitsaggregats 4 in unterschiedlichen Situationen sein, von denen aktuell keine perfekt zutrifft und Teilkonfigurationen von Maschinenparametern der autonomen landwirtschaftlichen Universal-Arbeitsmaschine 3 für ähnliche Arbeitsaggregattypen 4. Durch die Simulation kann aus diesen Teilkonfigurationen eine optimierte Konfiguration zusammengesetzt werden.

Die Simulation kann auch eine Routenplanung und/oder Abladepunkte berücksichtigen.

Zur Information des Nutzers 8 ist hier und vorzugsweise vorgesehen, dass die landwirtschaftliche Arbeitsmaschine einen Fortschritt der Durchführung der landwirtschaftlichen Arbeitsaufgabe an das Assistenzsystem 7 zurückmeldet, dass das Assistenzsystem 7 eingerichtet ist, den Fortschritt einem Nutzer 8 anzuzeigen, dass das Assistenzsystem 7 eingerichtet ist, Änderungen der Strategievorgaben basierend auf dem angezeigten Fortschritt vom Nutzer 8 zu erhalten, daraus einen geänderten Konfigurationsdatensatz zu erzeugen und an die landwirtschaftliche Arbeitsmaschine zu übermitteln.

So kann der Nutzer 8 nachsteuern, wenn das im Fortschritt abgebildete Ergebnis nicht seinen ursprünglichen oder aktuellen Vorstellungen entspricht.

Weiter ist hier und vorzugsweise vorgesehen, dass der Konfigurationsdatensatz Maschinenparametereinstellungen und vorzugsweise eine Routenplanung für die autonome landwirtschaftliche Arbeitsmaschine 2 umfasst, vorzugsweise, dass der Konfigurationsdatensatz ortsbasierte und/oder eventbasierte Maschinenparametereinstellungen und/oder Maschinenparametereinstellungsänderungen umfasst.

Ein Feld ist nicht immer homogen. Ortsbasierte Maschinenparametereinstellungen sind eine Möglichkeit, die Durchführung der landwirtschaftlichen Arbeitsaufgabe noch weiter zu optimieren. Eventbasierte Maschinenparametereinstellungen können beispielsweise für einsetzenden Regen vorgesehen sein.

Hier und vorzugsweise ist vorgesehen, dass der Konfigurationsdatensatz eine ortsabhängige Routenplanung umfasst, dass das Assistenzsystem 7 die ortsabhängige Routenplanung, insbesondere basierend auf Nutzervorgaben 8, derart ermittelt, dass unterschiedliche Zonen eines Feldes unterschiedlich von der autonomen landwirtschaftlichen Arbeitsmaschine 2 bearbeitet werden. So kann insbesondere eine optimierte Bodenverdichtung, eine optimierte Bodendurchmischung oder eine lokale Schädlingsbekämpfung umgesetzt werden.

Ebenfalls kann eine Aktualisierung der Routenplanung nach einer ersten Befahrung der Route oder des Feldes oder eines Teils davon und/oder live mit aktuellen Daten durch das Assistenzsystem 7 vorgesehen sein. Interessant ist diese Möglichkeit insbesondere auch bei einem Schwarm, wenn Daten eines Schwarmteilnehmers, insbesondere Umfeldsensordaten eines Schwarmteilnehmers, zur Aktualisierung der Routenplanung und/oder des Konfigurationsdatensatzes insgesamt durch das Assistenzsystem 7 verwendet werden, bevor die autonome landwirtschaftliche Arbeitsmaschine 2 selbst einen Punkt erreicht hat, an dem dieser Teil der Routenplanung oder ein ortsabhängiger Teil des Konfigurationsdatensatzes relevant wird.

Ein Feld mit unterschiedlichen Erntebedingungen und/oder Pflanzeneigenschaften und/oder historischen Erntebedingungen kann dem Assistenzsystem 7 bekannt und in der Datenbank 11 hinterlegt sein.

Die Datenbank 11 kann ebenfalls verschiedene optimale Maschineneinstellungen und/oder Routenplanungen und/oder berechnete Abladepunkte und/oder Umladepunkte und/oder Tankpunkte und/oder Nachfüllpunkte von Arbeitsressourcen enthalten. Diese Gesamtheit an Daten gibt die optimale Abarbeitung des Feldes vor. Die Simulation kann die landwirtschaftliche Arbeitsaufgabe damit durchspielen und einzelne Arbeitsschritte in Abhängigkeit der vom Benutzer vorgegebenen Strategievorgaben optimieren und in den Konfigurationsdatensatz gießen.

Ebenfalls kann vorgesehen sein, dass das Assistenzsystem 7 dem Nutzer 8 abweichende Strategievorgaben vorschlägt, wenn damit beispielsweise eine starke Optimierung einiger wichtiger Qualitätskriterien auf Kosten einer geringen Verschlechterung eines anderen Optimierungskriteriums möglich ist.

Das Assistenzsystem 7 kann auch als Managementsystem fungieren oder mit einem zusammenarbeiten und aus den bekannten Daten betriebswirtschaftliche Abläufe automatisieren. So lassen sich spezifische Informationen der jeweiligen autonomen landwirtschaftlichen Arbeitsmaschine 2, die diese vorzugsweise in Form von Zustandsdaten zurückmeldet ableiten und darstellen.

Außerdem kann vorgesehen sein, dass ein Strategiewahlverhalten des Nutzers 8 vom Assistenzsystem 7 registriert wird und in späteren Planungen bereits Strategievorgaben vorgeschlagen werden.

Beansprucht wird außerdem gemäß einer weiteren Lehre, der eigenständige Bedeutung zukommt, ein Verfahren zur Durchführung einer landwirtschaftlichen Arbeitsaufgabe mittels einer autonomen landwirtschaftlichen Arbeitsmaschine 2, wobei ein Assistenzsystem 7 vorgesehen ist, wobei das Assistenzsystem 7 einen Nutzer 8 bei der Planung und/oder Durchführung einer landwirtschaftlichen Arbeitsaufgabe mittels einer autonomen landwirtschaftlichen Arbeitsmaschine 2 unterstützt, wobei die autonome landwirtschaftliche Arbeitsmaschine 2 mittels eines Konfigurationsdatensatzes zur Durchführung der landwirtschaftlichen Arbeitsaufgabe konfiguriert wird, wobei das Assistenzsystem 7 einen Konfigurationsdatensatz für die autonome landwirtschaftliche Arbeitsmaschine 2 erzeugt und an die autonome landwirtschaftliche Arbeitsmaschine 2 übertragt, wobei das Assistenzsystem 7 ein Nutzerinterface 9 aufweist, wobei ein Nutzer 8 mittels des Nutzerinterfaces 9 dem Assistenzsystem 7 Strategievorgaben für die Durchführung der landwirtschaftlichen Arbeitsaufgabe mittels der autonomen landwirtschaftlichen Arbeitsmaschine 2 vorgibt, wobei das Assistenzsystem 7 aus den Strategievorgaben einen Konfigurationsdatensatz für die autonome landwirtschaftliche Arbeitsmaschine 2 erzeugt und an die autonome landwirtschaftliche Arbeitsmaschine 2 übermittelt.

Auf alle Ausführungen zu dem vorschlagsgemäßen Assistenzsystem 7 darf verwiesen werden. Alle Verfahrensschritte, die hierin beschrieben sind, insbesondere die, zu deren Ausführung das Assistenzsystem 7 oder die autonome landwirtschaftliche Universal-Arbeitsmaschine 3 eingerichtet sind, können einzeln oder in beliebiger Kombination Gegenstand des Verfahrens sein.

Beansprucht wird außerdem gemäß einer weiteren Lehre, der eigenständige Bedeutung zukommt, eine autonome landwirtschaftliche Universal-Arbeitsmaschine 3 eingerichtet zum Erhalt eines Konfigurationsdatensatzes von einem vorschlagsgemäßen Assistenzsystem 7.

Auf alle Ausführungen zu dem vorschlagsgemäßen Assistenzsystem 7 darf verwiesen werden.

Beansprucht wird außerdem gemäß einer weiteren Lehre, der eigenständige Bedeutung zukommt, eine Verwendung einer autonomen landwirtschaftlichen Arbeitsmaschine 2 in einem vorschlagsgemäßen Verfahren.

Auf alle Ausführungen zu dem vorschlagsgemäßen Assistenzsystem 7 darf verwiesen werden.

### Bezugszeichenliste

- 1: Mähdrescher
- 2: autonome landwirtschaftliche Arbeitsmaschine
- 3: Universal-Arbeitsmaschine
- 4: Arbeitsaggregat
- 5: Feldhäcksler
- 6: Rumpf-Feldhäcksler
- 7: Assistenzsystem
- 8: Nutzer
- 9: Nutzerinterface
- 10: Verbund
- 11: Datenbank

## Patentansprüche

1. Assistenzsystem für eine autonome landwirtschaftliche Arbeitsmaschine (2), wobei das Assistenzsystem (7) eingerichtet ist, einen Nutzer (8) bei der Planung und/oder Durchführung einer landwirtschaftlichen Arbeitsaufgabe mittels einer autonomen landwirtschaftlichen Arbeitsmaschine (2) zu unterstützen, wobei die autonome landwirtschaftliche Arbeitsmaschine (2) mittels eines Konfigurationsdatensatzes zur Durchführung der landwirtschaftlichen Arbeitsaufgabe konfiguriert werden kann, wobei das Assistenzsystem (7) eingerichtet ist, einen Konfigurationsdatensatz für die autonome landwirtschaftliche Arbeitsmaschine (2) zu erzeugen und an die autonome landwirtschaftliche Arbeitsmaschine (2) zu übertragen,
wobei das Assistenzsystem (7) ein Nutzerinterface (9) aufweist, wobei ein Nutzer (8) mittels des Nutzerinterfaces (9) dem Assistenzsystem (7) Strategievorgaben für die Durchführung der landwirtschaftlichen Arbeitsaufgabe mittels der autonomen landwirtschaftlichen Arbeitsmaschine (2) vorgeben kann,
wobei das Assistenzsystem (7) eingerichtet ist, aus den Strategievorgaben einen Konfigurationsdatensatz für die autonome landwirtschaftliche Arbeitsmaschine (2) zu erzeugen und an die autonome landwirtschaftliche Arbeitsmaschine (2) zu übermitteln.

2. Assistenzsystem nach Anspruch 1, **dadurch gekennzeichnet, dass** die autonome landwirtschaftliche Arbeitsmaschine (2) eine autonome landwirtschaftliche UniversalArbeitsmaschine (3) ist, die zur Verrichtung einer Vielzahl unterschiedlicher landwirtschaftlicher Arbeitsaufgaben konfigurierbar ist, indem sie mit wechselnden Arbeitsaggregaten (4) ausgestattet wird.

3. Assistenzsystem nach Anspruch 1 oder 2, **dadurch gekennzeichnet, dass** die autonome landwirtschaftliche Arbeitsmaschine (2) eine Steuereinheit aufweist, dass die Steuereinheit den Betrieb der autonomen landwirtschaftlichen Arbeitsmaschine (2), insbesondere KI-basiert, steuert, vorzugsweise, dass der Konfigurationsdatensatz Zielvorgaben und/oder Randbedingungen und/oder Einstellungen vereinzelter Maschinenparameter aufweist, die von der Steuereinheit bei der Steuerung berücksichtigt, insbesondere umgesetzt, werden.

4. Assistenzsystem nach einem der vorhergehenden Ansprüche, **dadurch gekennzeichnet, dass** das Assistenzsystem (7) eingerichtet ist, Prozesswissen für die landwirtschaftliche Arbeitsaufgabe für die autonome landwirtschaftliche Arbeitsmaschine (2) zu erzeugen und, insbesondere mit dem Konfigurationsdatensatz, an die autonome landwirtschaftliche Arbeitsmaschine (2) zu übertragen, vorzugsweise, dass das Assistenzsystem (7) eingerichtet ist, das Prozesswissen abhängig von dem Konfigurationsdatensatz zu erzeugen.

5. Assistenzsystem nach einem der vorhergehenden Ansprüche, **dadurch gekennzeichnet, dass** das Assistenzsystem (7) derart eingerichtet ist, dass der Nutzer (8) mittels des Nutzerinterfaces (9) eine landwirtschaftliche Arbeitsaufgabe planen kann, vorzugsweise, dass das Assistenzsystem (7) eingerichtet ist, basierend auf der Strategievorgabe, insbesondere dialogbasiert, dem Nutzer (8) eine Konfiguration der autonomen landwirtschaftlichen Universal-Arbeitsmaschine (3) für die Durchführung der landwirtschaftlichen Arbeitsaufgabe und/oder einen Verbund (10), insbesondere autonomer, landwirtschaftlicher Arbeitsmaschinen zur Durchführung der landwirtschaftlichen Arbeitsaufgabe vorzuschlagen.

6. Assistenzsystem nach Anspruch 5, **dadurch gekennzeichnet, dass** das Assistenzsystem (7) eingerichtet ist, basierend auf der Strategievorgabe, insbesondere dialogbasiert, dem Nutzer (8) eine Arbeitsgeschwindigkeit und/oder einen Einsatzplan für Betriebsmittel, insbesondere umfassend Einsatzzeitpunkte und/oder Einsatzmenge und/oder Beladeorte und/oder Belademengen, und/oder einen Abladeplan für Erntegut, insbesondere umfassend Abladezeitpunkte und/oder Abladeorte, und/oder eine Routenplanung für die autonome landwirtschaftliche Arbeitsmaschine (2), insbesondere autonome landwirtschaftliche Universal-Arbeitsmaschine (3), und/oder den Verbund (10) vorzuschlagen.

7. Assistenzsystem nach Anspruch 5 oder 6, **dadurch gekennzeichnet, dass** das Assistenzsystem (7) eingerichtet ist, basierend auf der Strategievorgabe Konfigurationsdatensätze und/oder Prozesswissen für den Verbund (10) zu erzeugen und an mindestens zwei autonome landwirtschaftliche Arbeitsmaschinen (2) des Verbunds (10), insbesondere zwei autonome landwirtschaftliche Universal-Arbeitsmaschinen (3) des Verbunds (10), zu übermitteln.

8. Assistenzsystem nach einem der vorhergehenden Ansprüche, **dadurch gekennzeichnet, dass** das Assistenzsystem (7) eine Datenbank (11) mit Datenbankinformationen (11) umfassend Feldinformationsdaten, insbesondere Bestandsdaten, und/oder Umweltdaten, insbesondere Wetterdaten, und/oder Ergebnissen vergangener Arbeitsaufgaben, insbesondere verknüpft mit vergangenen Konfigurationsdatensätzen, die zu den Ergebnissen geführt haben, und/oder Maschinendaten der autonomen landwirtschaftlichen Arbeitsmaschine (2) aufweist und basierend auf den Datenbankinformationen (11) den Konfigurationsdatensatz und/oder das Prozesswissen erzeugt.

9. Assistenzsystem nach einem der vorhergehenden Ansprüche, **dadurch gekennzeichnet, dass** das Assistenzsystem (7) eingerichtet ist, eine Simulation der Durchführung der landwirtschaftlichen Arbeitsaufgabe durchzuführen, um den Konfigurationsdatensatz zu ermitteln, vorzugsweise, dass das Assistenzsystem (7) eingerichtet ist, in der Simulation unterschiedliche Kombinationen vordefinierter Teilkonfigurationen zu kombinieren, um eine optimierte Gesamtkonfiguration in Abhängigkeit von Prozessinformationsdaten zu ermitteln.

10. Assistenzsystem nach einem der vorhergehenden Ansprüche, **dadurch gekennzeichnet, dass** die landwirtschaftliche Arbeitsmaschine einen Fortschritt der Durchführung der landwirtschaftlichen Arbeitsaufgabe an das Assistenzsystem (7) zurückmeldet, dass das Assistenzsystem (7) eingerichtet ist, den Fortschritt einem Nutzer (8) anzuzeigen, dass das Assistenzsystem (7) eingerichtet ist, Änderungen der Strategievorgaben basierend auf dem angezeigten Fortschritt vom Nutzer (8) zu erhalten, daraus einen geänderten Konfigurationsdatensatz zu erzeugen und an die landwirtschaftliche Arbeitsmaschine zu übermitteln.

11. Assistenzsystem nach einem der vorhergehenden Ansprüche, **dadurch gekennzeichnet, dass** der Konfigurationsdatensatz Maschinenparametereinstellungen und vorzugsweise eine Routenplanung für die autonome landwirtschaftliche Arbeitsmaschine (2) umfasst, vorzugsweise, dass der Konfigurationsdatensatz ortsbasierte und/oder eventbasierte Maschinenparametereinstellungen und/oder Maschinenparametereinstellungsänderungen umfasst.

12. Assistenzsystem nach einem der vorhergehenden Ansprüche, **dadurch gekennzeichnet, dass** der Konfigurationsdatensatz eine ortsabhängige Routenplanung umfasst, dass das Assistenzsystem (7) die ortsabhängige Routenplanung, insbesondere basierend auf Nutzervorgaben (8), derart ermittelt, dass unterschiedliche Zonen eines Feldes unterschiedlich von der autonomen landwirtschaftlichen Arbeitsmaschine (2) bearbeitet werden.

13. Verfahren zur Durchführung einer landwirtschaftlichen Arbeitsaufgabe mittels einer autonomen landwirtschaftlichen Arbeitsmaschine (2), wobei ein Assistenzsystem (7), insbesondere nach einem der vorhergehenden Ansprüche, vorgesehen ist, wobei das Assistenzsystem (7) einen Nutzer (8) bei der Planung und/oder Durchführung einer landwirtschaftlichen Arbeitsaufgabe mittels einer autonomen landwirtschaftlichen Arbeitsmaschine (2) unterstützt, wobei die autonome landwirtschaftliche Arbeitsmaschine (2) mittels eines Konfigurationsdatensatzes zur Durchführung der landwirtschaftlichen Arbeitsaufgabe konfiguriert wird, wobei das Assistenzsystem (7) einen Konfigurationsdatensatz für die autonome landwirtschaftliche Arbeitsmaschine (2) erzeugt und an die autonome landwirtschaftliche Arbeitsmaschine (2) übertragt,
wobei das Assistenzsystem (7) ein Nutzerinterface (9) aufweist, wobei ein Nutzer (8) mittels des Nutzerinterfaces (9) dem Assistenzsystem (7) Strategievorgaben für die Durchführung der landwirtschaftlichen Arbeitsaufgabe mittels der autonomen landwirtschaftlichen Arbeitsmaschine (2) vorgibt,
wobei das Assistenzsystem (7) aus den Strategievorgaben einen Konfigurationsdatensatz für die autonome landwirtschaftliche Arbeitsmaschine (2) erzeugt und an die autonome landwirtschaftliche Arbeitsmaschine (2) übermittelt.

14. Autonome landwirtschaftliche Universal-Arbeitsmaschine eingerichtet zum Erhalt eines Konfigurationsdatensatzes von einem Assistenzsystem (7) nach einem der Ansprüche 1 bis 12.

15. Verwendung einer autonomen landwirtschaftlichen Arbeitsmaschine (2) in einem Verfahren nach Anspruch 13.
